# EUROPÄISCHE PATENTSCHRIFT

(11) **EP 1 781 965 B1**
(45) Veröffentlichungstag und Bekanntmachung des Hinweises auf die Patenterteilung: **14.01.2009**
(21) Anmeldenummer: 05767331.1
(22) Anmeldetag: 15.07.2005
(51) Int. Cl.: F16H 57/02

(54) **GEHÄUSE, GETRIEBE UND GETRIEBEBAUKASTEN**
HOUSING GEARBOX AND GEARBOX ASSEMBLY
CARTER, BOITE DE VITESSES ET SYSTEME MODULAIRE DE BOITES DE VITESSES

(30) Priorität: 17.08.2004 DE 102004039896; 09.06.2005 DE 102005026657
(43) Veröffentlichungstag der Anmeldung: 09.05.2007
(73) Patentinhaber: Sew-Eurodrive GmbH & Co. KG, 76646 Bruchsal (DE)
(72) Erfinder: BARTON, Peter, 75015 Bretten (DE)
(86) Internationale Anmeldenummer: PCT/EP2005/007730
(87) Internationale Veröffentlichungsnummer: WO 2006/018085

(56) Entgegenhaltungen:
- EP-A- 1 045 169
- DE-A1- 1 925 909
- DE-A1- 1 932 624
- US-A- 2 623 406
- US-A- 3 029 661
- US-A- 5 680 793
- "Posired 2 264/4 (Kegel) Stirnradgetriebe" März 2001 (2001-03), PIV DRIVES GMBH , BAD HOMBURG , XP002351171 in der Anmeldung erwähnt das ganze Dokument

## Beschreibung

Die Erfindung betrifft ein Gehäuse, Getriebe und einen Getriebebaukasten.

Aus der DE 37 05 812 C2 ist eine Getriebebaureihe, also ein Getriebebaukasten, bekannt, bei dem der Drehmomentensprung mittels des Einfügens von zwischengeordneten Sondergetriebegrößen mit vergrößertem Endachsabstand verringert ist (Spalte 2, Zeile 11-20).

Aus der DE 2 049 616 ist ein Getriebe bekannt, bei dem dreistufige und vierstufige Varianten herstellbar sind unter Verwendung desselben Gehäuses. Jedoch ist dabei bei gleicher Eintriebswelle der Ort der Abtriebswelle verändert.

Aus dem Katalog der Firma PIV ist eine Getriebebaureihe, also ein Getriebebaukasten, bekannt, die mehrstufige Getriebe umfasst, wobei als eintreibende Stufe wahlweise eine Winkelgetriebestufe oder eine Stimradgetriebestufe umfasst ist.. Auf Seite 34 ist das Bohrungsbild für eine vierstufige Variante gezeigt, wobei jede Bohrung zu einer Lagerung für eine zumindest eine Verzahnung tragenden Welle gehört" Wenn eine oder zwei Bohrungen nicht verwendet werden, sind zweistufige Varianten, wie auf Seite 22 gezeigt, oder dreistufige Varianten, wie auf Seite 26 gezeigt, ausführbar. Die nichtbenutzten Bohrlöcher sind mit Deckeln oder entsprechenden Mitteln dicht verschließbar. Auf diese Weise ist dasselbe Gehäuse für verschiedene Varianten der Getriebereihe verwendbar. Dadurch sinken Lagerraum und Kosten, insbesondere Lagerkosten.

Wie aus dem Katalog, insbesondere auch den Seiten 32 und 34, ersichtlich, sind die Bohrungen linear angeordnet mit Ausnahme der viertletzten Bohrung Die letzte, vorletzte und drittletzte zugehörige Wellenachse liegen also in einer Ebene.

Auf Seite 86 ist ein dreistufiges Getriebe gezeigt, bei dem eintreibend eine Winkelgetriebestufe vorgesehen ist.

Auf Seite 90 ist ein vierstufiges Getriebe gezeigt, bei dem eintreibend ebenfalls eine Winkelgetriebestufe vorgesehen ist. Dabei muss allerdings die seitliche Bohrung relativ zur Variante nach Seite 86 für die eintreibende Welle verschoben werden. Es ist also nicht dieselbe Bohrung für die eintreibende Welle verwendbar. Somit sind die Kosten und der Lagerraum nachteiligerweise erhöht, Insbesondere sind also zusätzliche Bearbeitungsschritte oderAdapterteile notwendig. Darüber hinaus muss schon im Rohgussteil genügend dickwandiges Material vorgesehen werden.

Es ist aber auch erkennbar, dass die eintreibenden Komponenten für die auf Seite 2 abgebildeten Getriebe verschieden sind. Denn Seite 56 zeigt ein Getriebe gemäß Seite 2, mittleres Bild. Denn Seite 88 zeigt ein Getriebe gemäß Seite 2, unterem Bild. Seite 24 lässt das Maß a erkennen. Die Gehäuse der Getriebe der Seiten 2, 56 und 88 sind gleich. Daraus ist erkennbar, dass k1 der Seite 88 nicht gleich Ist zu der Differenz von k1 der Seite 56 und dem Maß a der Seite 24. Daher sind die eintreibenden Komponenten verschieden auszuführen. Dies ist nachteilig, weil die Fertigungskosten hoch sind, der notwendige Lagerraum große ist und die Verwaltung kompliziert.

Es ist auch erkennbar, dass bei den PIV Getrieben die Position der zweiten Welle bei der dreistufigen und bei der vierstufigen Variante im gleichen Gehäuse verschieden sind. Dies hat hohe Fertigungskosten und Komponentenkosten zur Folge.

Aus der US 3,029,661 , die die Merkmale des Oberbegriffs des Anspruchs 1 offenbart, ist ein Getriebe bekannt, das ungenutzte Wellenaufnahmen für weitere Wellen umfasst. Dabei sind diese ungenutzten Wellenaufnahmen allerdings mit zusätzlichen Teilen abgedichtet, insbesondere Getriebedeckel und zugehörige Schrauben.

Aus der DE 1 925 909 ist ein Zahnradgetriebe-Reihensystem bekannt, bei dem das Gehäuse an einer Trennebene in eine Unterteil und ein Oberteil aufgetrennt ist

Der Erfindung liegt daher die Aufgabe zugrunde, ein Gehäuse für eine Getriebebaureihe und einen Getriebebaukasten mit verringertem Lagervolumen und kostengünstiger weiterzubilden und herstellbar zu machen.

Erfindungsgemäß wird die Aufgabe bei dem Gehäuse nach den in Anspruch 1, bei dem Getriebe nach den in Anspruch 12 und bei dem Getriebebaukasten nach den in Anspruch 13 angegebenen Merkmalen gelöst.

Wichtige Merkmale der Erfindung bei dem Gehäuse sind, dass das Gehäuse für ein mehrstufiges Getriebe einer Getriebebaureihe vorgesehen ist, welche zumindest zwei verschiedene Varianten von Getrieben umfasst,
umfassend zumindest
- zwei oder mehr Bohrungen zur wahlweisen Nutzung als erste Bohrung, die zur Aufnahme einer eintreibenden Welle vorgesehen ist,
- eine zweite Bohrung C zur Aufnahme einer Welle, die
   bei Nicht-Nutzung der ersten Bohrung als eintreibende Welle und
   bei Nutzung der ersten Bohrung als erste Zwischenwelle vorgesehen ist,
- gegebenenfalls weitere Bohrungen (D,E,G) zur Aufnahme weiterer Wellen,
- und eine letzte Bohrung F zur Aufnahme einer abtreibenden Welle,
wobei durch Nutzung oder Nicht-Nutzung mindestens einer der weiteren Bohrungen (D,G) verschiedenstufige Varianten der Getriebebaureihe herstellbar sind,
wobei die Achse der in der zweiten Bohrung C aufgenommenen Welle und die Achse der in der letzten Bohrung F aufgenommenen Welle bei allen Varianten, insbesondere also auch den verschiedenstufigen Varianten, unveränderte Lage aufweisen,
wobei das Gehäuse statt der Bohrungen Aussparungen zur Schaffung der jeweiligen Bohrung aufweist,
wobei die Aussparungen als Knockouts, also mit dünner Wandstärke, ausgeführt sind.

Von Vorteil ist dabei, dass die Position des Abtriebs und der Bohrung C mit zugehöriger Welle immer gleich ist bei allen verschieden stufigen Varianten. Auf diese Weise sind verschiedenstufge Getriebe in die immer gleiche Anwendung einbaubar Die Anwendung, also eine Maschine oder Anlage, muss also nicht geändert werden, wenn die Stufenzahl geändert werden soll. Aber auch Anbauten, wie Montageflansche, Hilfsantriebe, Lüfter, Kühlungen und Sensoren, sind an derselben Stelle anmontierbar. Es sind also auch entsprechende Befestigungsmittel oder Verdickungen in der Gehäusewand vorsehbar

Außerdem ist vorteilhaft mit einem einzigen Gehäuse verschiedene verschiedenstufige Getriebe erzeugen zu können Dazu sind die Bohrungen schon vorgesehen Es genügt also ein Nacharbeiten und/oder Anmontieren von weiteren Komponenten, wie Lager und Welle in der jeweiligen zu nutzenden Bohrung.

Wesentlicher Vorteil ist auch, dass wegen der stets gleichen Position der Welle in Bohrung C und F viel mehr Komponenten wiederverwendbar sind bei verschiedenen Getrieben als im Stand der Technik.

Da nun die Welle in Bohrung C an der stets gleichen Position ist, sind auch alle eintriebsseitigen Komponenten wiederverwendbar" Bei Verwendung einer eintreibenden Winkelstufe, die mit einem Adapter mit dem Gehäuse verbunden wird, gilt dies insbesondere und bringt Kostenvorteile. Die hierzu verwendete Welle kann sogar bei parallel zur Welle in Bohrung C angeordneter Welle ebenfalls wiederverwendet werden.

Bei einer vorteilhaften Ausgestaltung sind zumindest zwei dieser zwei oder mehr Bohrungen zur wahlweisen Nutzung als erste Bohrung jeweils derart orientiert, dass die jeweils zugehörige eintreibende Wellenachse die Achse der zweiten Welle schneidet und diese beiden eintreibenden Wellenachsen zueinander rechtwinklig orientierbar sind. Insbesondere ist eine dritte der Bohrungen zur wahlweisen Nutzung als erste Bohrung, die zur Aufnahme einer eintreibenden Welle vorgesehen ist, derart vorgesehen ist und orientiert ist, dass die Achse der eintreibende Wellenachse parallel zur Achse der in der Bohrung C aufgenommenen Welle ausgerichtet ist.

Von Vorteil ist dabei, dass wahlweise zwei verschiedene eintreibende Wellen einbringbar sind, die in verschiedenen Richtungen orientiert sind.. Aber nicht nur Winkelstufen sondern auch eine Stirnradstufe ist als Eintrteb herstellbar mit dem selben Gehäuse. Somit sind verschiedene Anordnungen und Verwendungen des Getriebes innerhalb einer Anlage ermöglicht. Je nach vorhandenem Bauraum kann also der zugehörige eintreibende Elektromotor an der Vorderwand oder Obenwand oder auch Seitenwand angebracht werden.

Als Gussteil ist somit immer nur ein gleiches Gehäuse zu fertigen, obwohl die Varianten verschieden ausführbar sind, insbesondere verschieden bezüglich der Anzahl der Getriebestufen des jeweiligen Getriebes und/oder der relativen Orientierung der eintreibenden und abtreibenden Wellenachse zueinander Im Lager muss nur ein- und dasselbe Gehäuse gelagert werden, auch wenn verschiedene Getriebe daraus zu fertigen sind" Dies spart Aufwand, Lagerraum und Kosten.

Vorteil der Erfindung ist auch, dass die Bemaßung der eintreibenden Teile auch bei 90° Versatz gleich ist. Somit sind die entsprechenden Teile wiederverwendbar.

Bei einer vorteilhaften Ausgestaltung sind durch Nutzung oder Nicht-Nutzung mindestens einer der weiteren Bohrungen verschiedenstufige Varianten der Getriebebaureihe herstellbar, wobei die erste und letzte Bohrung unverändert nutzbar sind Insbesondere ist bei den verschiedenstufigen Varianten die Anzahl der aufeinanderfolgenden Getriebestufen verschieden, wenn die erste dieser Stufen die Bohrung C umfasst und die letzte die Bohrung F. Von Vorteil ist dabei, dass immer nur ein und dasselbe Gehäuse notwendig ist und somit die Kosten und der Lagerraum sowie der Aufwand reduziert sind.

Bei einer vorteilhaften Ausgestaltung ist die eintreibende Welle zumindest mit einem von der ersten Getriebestufe umfassten Verzahnungsteil verbunden, wobei die abtreibende Welle zumindest mit einem von der letzten Getriebestufe umfassten Verzahnungsteil verbunden ist, wobei jede weitere Welle zumindest mit zwei, von jeweiligen Getriebestufen umfassten Verzahnungsteilen verbunden ist Von Vorteil ist dabei, dass schrägverzahnte oder geradverzahnte Stirnradgetriebestufen oder auch andere Arten von Getriebestufen verwendbar sind

Bei einer vorteilhaften Ausgestaltung ist eine weitere Bohrung zur wahlweisen Nutzung als erste Bohrung vorgesehen, wobei diese derart orientiert ist, dass die zugehörige eintreibende Wellenachse parallel zur Achse der zweiten Welle ausgerichtet ist. Von Vorteil ist dabei, dass einfache und kostengünstige Stirnradgetriebestufe verwendbar sind.

Bei einer vorteilhaften Ausgestaltung sind nicht genutzte Bohrungen mit einem Verschließmittel verschließbar. Von Vorteil ist dabei, dass bei Nicht-Nutzung die Bohrung in einfacher weise abdichtbar ist..

Erfindungsgemäß weist das Gehäuse statt der Bohrungen Aussparungen zur Schaffung der jeweiligen Bohrung auf. Die Aussparungen sind als Knockouts, also mit dünner Wandstärke, ausgeführt. Von Vorteil ist dabei, dass Gussmasse und sogar Verschließmittel einsparbar sind und die Bearbeitungskosten trotzdem niedrig sind.

Bei einer vorteilhaften Ausgestaltung sind die Bohrungen jeweils an einer Lagerstelle des Gehäuses vorgesehen, insbesondere also ist die Gehäusewand im Bereich um die Bohrung herum verdickt ausgeführt. Von Vorteil ist dabei, dass schon in der Ausführung des Rohgussteils die Mehrfachverwendung des Gehäuses für verschiedene Getriebevarianten der Baureihe integriert ist. Insbesondere sind vorteiligerweise alle möglicherweise verwendbaren Lagerstellen entsprechend stabil ausgeführt, wobei nur noch die Bohrung hergestellt und bearbeitet werden muss.

Bei einer vorteilhaften Ausgestaltung steht das Verzahnungsteil der eintreibenden Welle zumindest mit einem Verzahnungsteil der zweiten Welle im Eingriff zur Bildung einer ersten Getriebestufe, wobei ein weiteres Verzahnungsteil der zweiten Welle zumindest mit einem Verzahnungsteil einer weiteren Welle im Eingriff steht zur Bildung einer zweiten Getriebestufe, und wobei ein Verzahnungsteil einer weiteren Welle zumindest mit einem Verzahnungsteil der abtreibenden Welle im Eingriff steht zur Bildung einer letzten Getriebestufe.. Von Vorteil ist dabei, dass zwei- oder mehrstufige Getriebe ausführbar sind.

Bei einer vorteilhaften Ausgestaltung sind mindestens drei Bohrungen in einer geraden Linie angeordnet.. Von Vorteil ist dabei, dass ein möglichst niedriges Gehäuse mit möglichst kompaktem Volumen herstellbar ist.

Bei einer vorteilhaften Ausgestaltung ist die wahlweise genutzte oder nicht-genutzte weitere Bohrung zur Herstellung verschiedenstufiger Varianten der Getriebebaureihe nicht in dieser Linie angeordnet. Von Vorteil ist dabei, dass die eintreibende und abtreibende Welle an der gleichen Position anbringbar sind.

Wesentliche Merkmale der Erfindung bei dem Getriebe sind, dass das jeweilige Getriebe, also die jeweilige Variante der Getriebebaureihe, aus dem gleichen Gussteil herstellbar ist..

Es muss nur die Bohrung zum Einbau von Lagern und/oder Adaptern genutzt werden oder nicht.. Somit ist nur eine Urform beim Gießen notwendig, was Kosten und Aufwand reduziert.

Wesentliche Merkmale der Erfindung bei dem Getriebebaukasten sind, dass der Getriebebaukasten verschiedene Varianten von mehrstufigen Getrieben umfasst, wobei die Gehäuse aller Varianten aus einem der vorbeschriebenen Gehäuse herstellbar sind.

Von Vorteil ist dabei, dass wiederum dasselbe Gehäuse für verschiedene Varianten verwendbar ist und somit die Logistik bei weltweit verteilt aufgebauter Fertigung sowie die Lagerkosten verringerbar sind. Denn es muss als Gehäuse stets nur eine Sorte hergestellt werden, auch wenn an anderen Orten daraus verschiedene Getriebevarianten hergestellt werden.

Bei einer vorteilhaften Ausgestaltung ist insbesondere die Herstellung von Bohrungen, durch Entfernen von Knockouts und/oder Bearbeitung von Aussparungen vorgesehen. Insbesondere ist an einer Lagerstelle ein Adapter verbindbar, der das zugehörige Lager umfasst. Dies ist einfach und kostengünstig.

Bei einer vorteilhaften Ausgestaltung umfassen Varianten ein Gehäuse nach oben beschriebener Art mit den dort beschriebenen Vorteilen.

Weitere Vorteile ergeben sich aus den Unteransprüchen.

### Bezugszeichenliste

- A: Adapter, auf Bohrung aufgesetzt
- B: Bohrung
- C: Bohrung
- D: Bohrung
- E: Bohrung
- F: Bohrung
- G: Bohrung

- 1: Gehäuse
- 2: Kegelritzel

Die Erfindung wird nun anhand von Abbildungen näher erläutert.

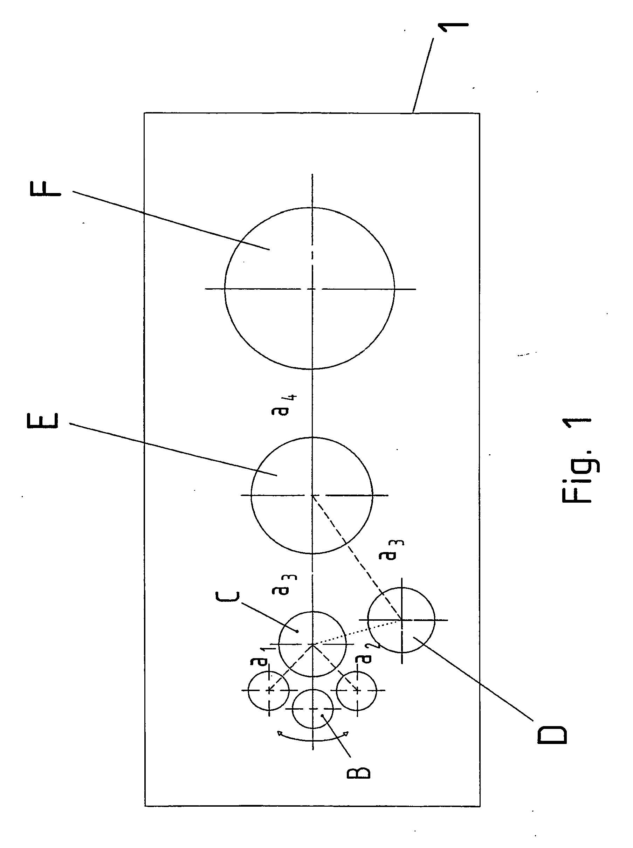

In der Figur 1 ist ein erfindungsgemäßes Gehäuse der Getriebebaureihe von der Seite her symbolisch gezeigt. Die Bohrungen B, C, D, E, F sind an Bereichen des Gehäuses vorgesehen, wo Verdickungen der Gehäusewand ausgeführt sind, damit eine Lagerstelle geschaffen werden kann.. Beim Gießen des Gehäuses ist Material einsparbar, indem die Bereiche von Bohrungen in der Gehäusewand frei gelassen werden. In diesem Fall ist nur eine einfache schnell ausführbare Nachbearbeitung möglich.

Zur Herstellung der einzelnen Varianten der Getriebebaureihe werden entweder alle Bohrungen oder nur manche Bohrungen zur Lagerung für eine Welle genutzt. Die nicht genutzten Bohrungen werden mit einem Verschließmittel dicht verschlossen. Als Verschließmittel sind Deckel und dergleichen geeignet.

Erfindungsgemäß ist eine Aussparung, wie Knockout oder andere Verdünnung der Gehäusewand oder dergleichen, vorgesehen.. Auf diese Weise ist das Verschließmittel einsparbar. Wenn jedoch die Anbringung der Bohrung notwendig ist, ist Material entsprechend zu entfernen.

Wesentlicher Vorteil ist nun bei der Erfindung, dass dasselbe Gehäuse für Getriebe mit einer verschiedenen Anzahl von Stufen verwendet werden kann, wobei möglichst wenige Bohrungen oder Aussparungen für die gesamte Reihe notwendig sind. Es werden also bei verschiedenstufigen Getrieben mit jeweils verschieden ausgerichteter Bauart, also verschiedene relative Orientierungen der eintreibenden zur abtreibenden Wellenachse, die selben Bohrungen genutzt

Figur 1 zeigt die Bohrungen in der Seitenwand des Gehäuses. Bohrung F dient zur Einbringung des Lagers der abtreibenden Welle.. Die abtreibende Welle trägt ein Verzahnteil, mit dem sie stoffschlüssig, kraftschlüssig oder formschlüssig verbunden ist und das im Eingriff steht mit einem Verzahnteil, das mit der im in der Bohrung E vorgesehenen Lager gelagerten Welle verbunden ist.. Die genannten Verzahnteile bilden also die letzte Stufe des Getriebes. Der zugehörige Achsabstand beträgt a_4.

In entsprechender Weise ist die vorletzte Stufe mit den Bohrungen E und D realisiert, wobei der Achsabstand a_3 beträgt..

Die dieser Stufe vorschaltbare Stufe ist wiederum in entsprechender Weise mit den Bohrungen D und C realisiert, wobei der Achsabstand a_2 beträgt.

Ebenso ist noch eine weitere Stufe vorschaltbar, die analog mit den Bohrungen C und B realisiert ist, wobei der Achsabstand a_1 beträgt. Da das Gehäuse genügend groß ist, ist die Position der Bohrung B in einem Schwenkbereich um die Bohrung C herum positionierbar. Dies ist in Figur 1 gestrichelt angedeutet. Die Bohrung B muss also nicht in einer Linie mit den Bohrungen C, E und F stehen..

Wie aus Figur 1 ersichtlich, ist ein vierstufiges Getriebe ausführbar Obere und untere Hälfte des Getriebegehäuses sind dabei getrennt fertigbar, wobei die Trennungslinie in der Figur 1 angedeutet ist und durch die Mittelpunkte der Bohrungen B, C, E, F geht Zur Herstellung des Getriebes werden die beiden Hälften aufeinander aufgesetzt nach Einbringung der Wellen mit den Verzahnteilen. Alternativ ist das Gehäuse auch aus einem einzigen Rohgussteil fertigbar, wobei dann die relative Positionierung der beiden Hälften zueinander entfällt.

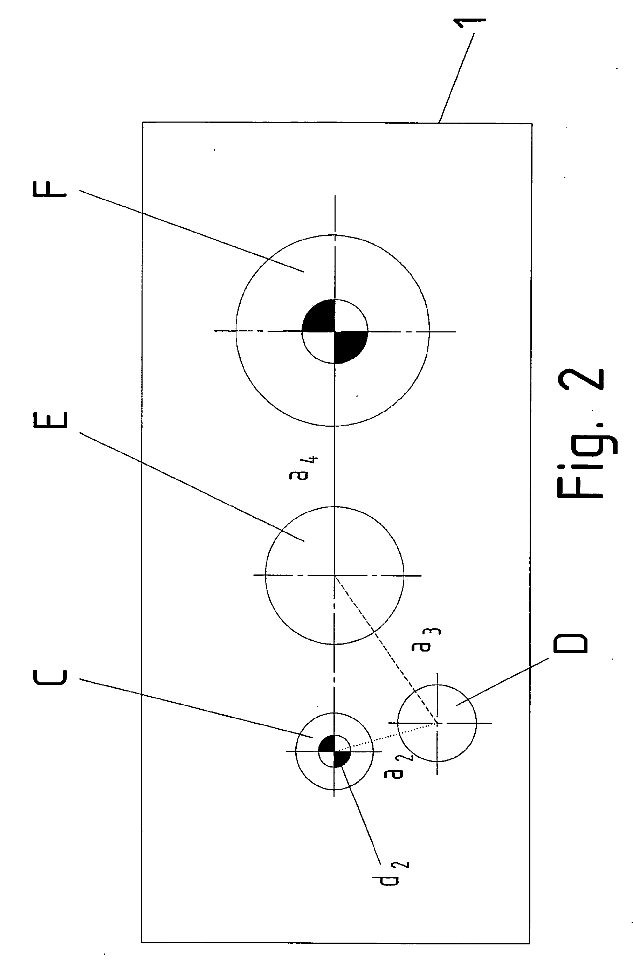

Wie in Figur 2 gezeigt, ist, wenn die Bohrung B nicht genutzt wird, ein dreistufiges Getriebe herstellbar. Für die eintreibenden Welle wird Bohrung C genutzt, Die erste Stufe dieses dreistufigen Getriebes nutzt also die Verzahnteile, welche mit den in den Bohrungen C und D gelagerten Wellen verbunden sind.

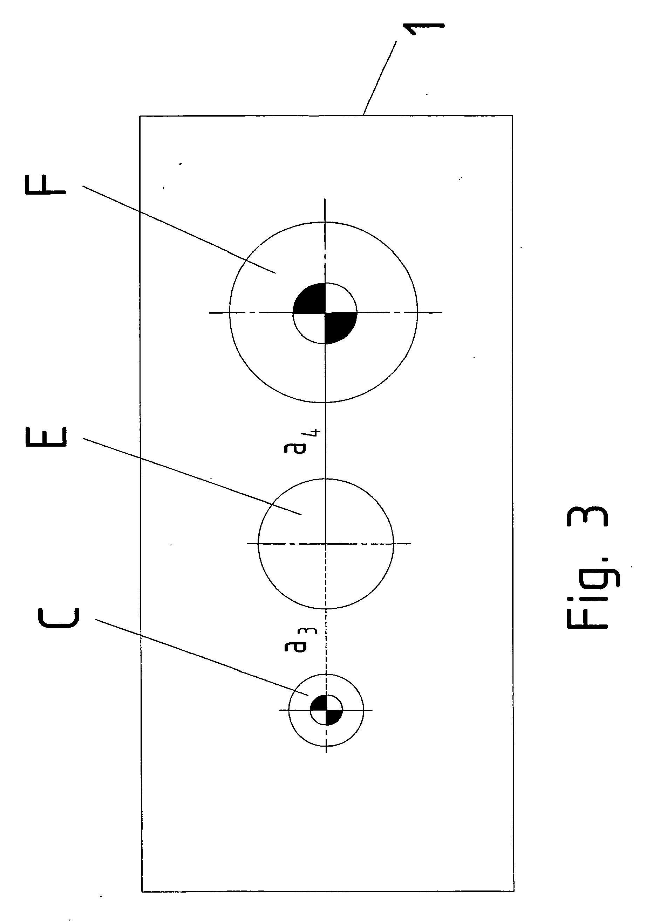

Wie in Figur 3 gezeigt, ist, wenn die Bohrung D nicht genutzt wird, ein zweistufiges Getriebe herstellbar. Dabei ist von Vorteil, dass der Achsabstand der dabei ersten Stufe a_3 beträgt und somit die Übersetzungen angepasst sind. Für die eintreibenden Welle wird wiederum Bohrung C genutzt.

Vorteiligerweise ist der Abstand der Bohrungsmittelpunkte der Bohrungen C und E wiederum als a_3 gewählt. Dies führt nämlich als Vorteil dazu, dass Verzahnungen bei dem dreistufigen und bei dem zweistufigen wiederverwendbar sind. Somit sinken die Fertigungskosten und es können viele Varianten aus nur wenigen Einzelkomponenten hergestellt werden.

Die Wellenachse der eintreibenden Welle ist parallel ausgerichtet zu den weiteren Wellenachsen der in den Bohrungen C, D, E und F sitzenden Wellen..

In den Figuren 1 bis 3 sind also alle Stufen als Stirnradgetriebestufen realisiert. Zur Verminderung der Betriebsgeräusche sind dabei nicht nur geradverzahnte sondern wahlweise auch schrägverzahnte Stirnräder vorteiligerweise verwendbar.

In Figur 4 ist als eintreibende Stufe eine Winkelgetriebestufe gezeigt Dazu ist an einer Vorderseite eine Bohrung zur Aufnahme eines aufsetzbaren Adapters A vorgesehen Ein beispielhaft verwendbares Kegelritzel 2 ist gestrichelt eingezeichnet. Die Wellenachse der eintreibenden Welle schneidet die Achse der in Bohrung C sitzenden Welle..

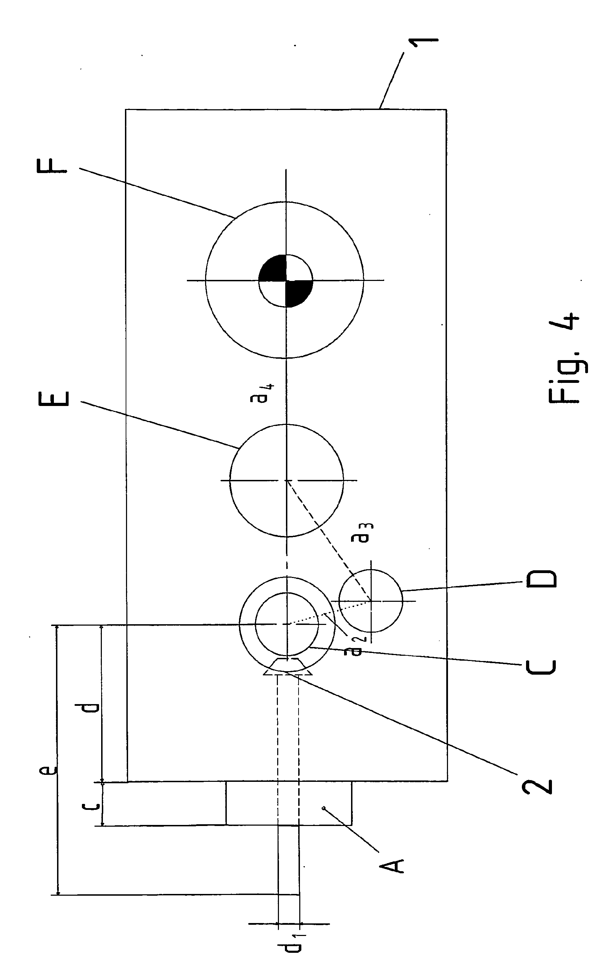

Figur 4 zeigt somit eine vierstufige Ausführung

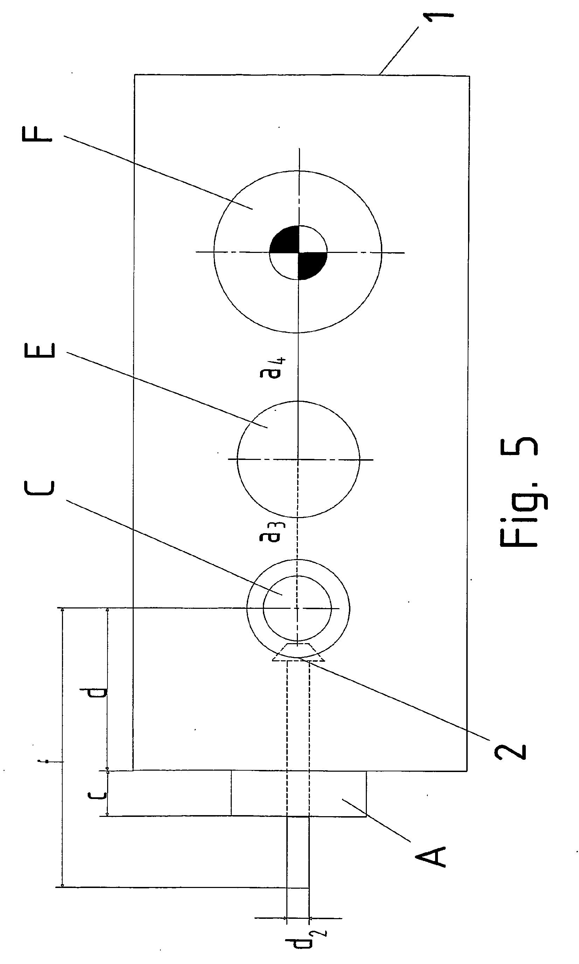

In Figur 5 ist eine entsprechende dreistufige Ausführung gezeigt, wobei die Bohrungen D wiederum nicht genutzt wird.

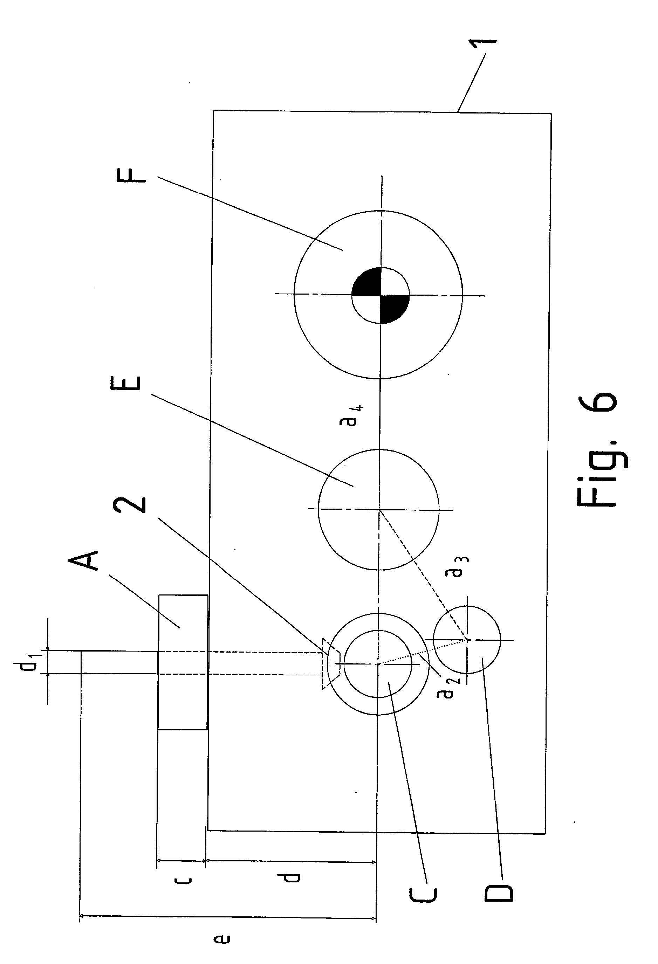

In Figur 6 ist die eintreibende Welle gegenüber der eintreibenden Welle nach Figur 4 um 90° verdreht, also an der Oberseite des Getriebes vorgesehen.

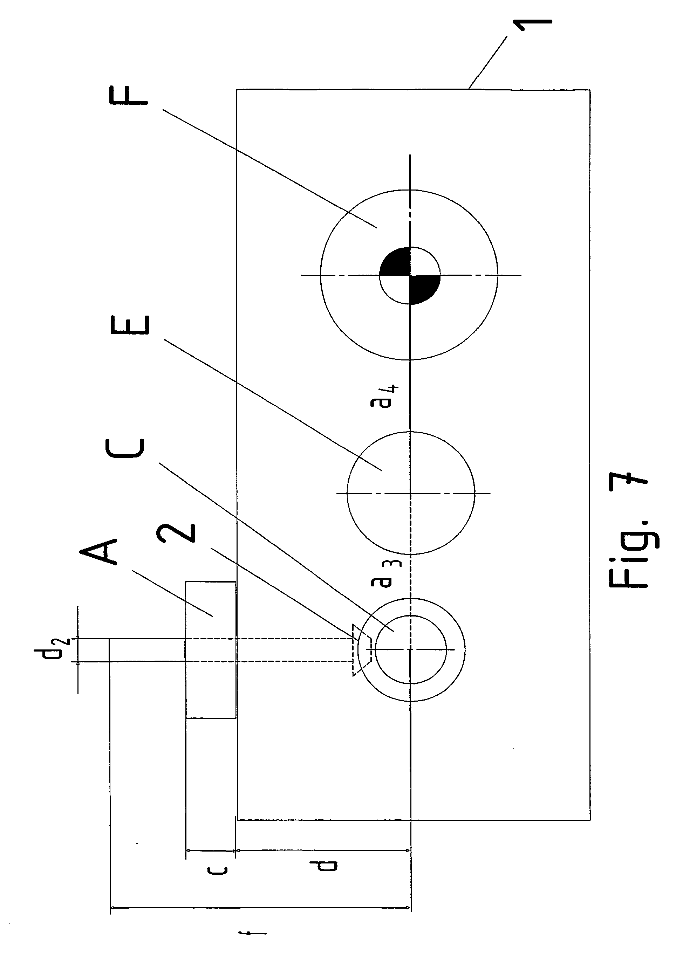

Im Gegensatz dazu ist in Figur 7 eine ähnliche, aber dreistufige Ausführung gezeigt. Hier ist der besondere Vorteil der Erfindung zu erkennen. Durch die geschickte Anordnung der Bohrung D kann durch deren Nicht-Benutzung aus einem vierstufigen ein dreistufiges Getriebe gemacht werden, ohne dass die Position der eintreibenden Welle geändert werden muss. Ein und dasselbe Gehäuse ist also für verschiedenstufige Getriebe verwendbar, insbesondere bei einer eintreibend vorhandenen Winkelgetriebestufe. Dies ist insbesondere zum Stand der Technik gesehen unterschiedlich und verbessert.. Denn die Bohrung zur Aufnahme der Lagerung der eintreibenden Welle ist nicht anders ausgeführt bei dem drei-und bei dem vierstufigen Getriebe.

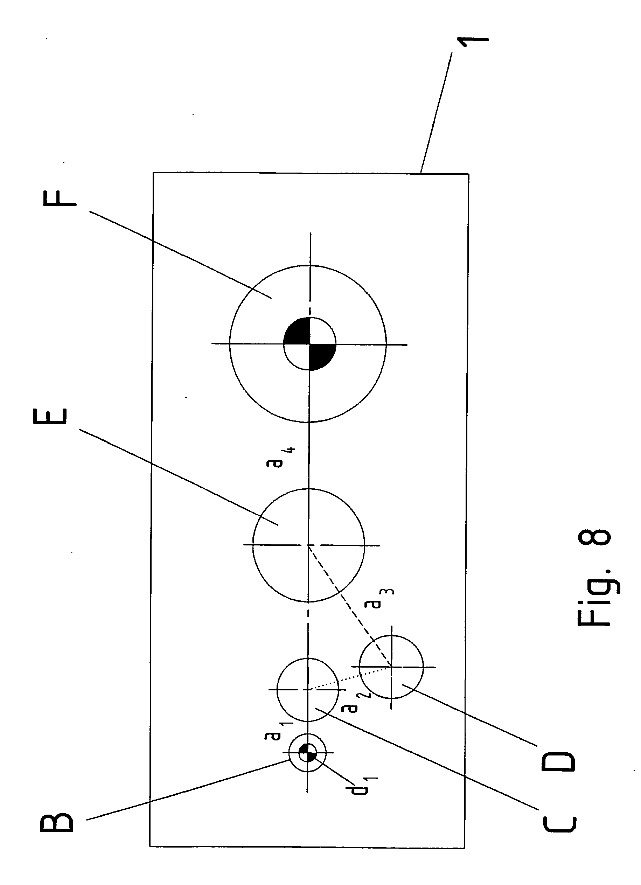

In Figur 8 ist nochmals die vierstufige Ausführung eines Stirnradgetriebes gezeigt. Die Bohrung C ist hier in der Lagerstelle der ersten Zwischenwelle eingebracht. Sie trägt hier also zwei Stirnräder. In Figur 4, 5, 6,und 7 trägt diese in Bohrung C vorgesehene Welle ein Kegelrad, das im Eingriff steht mit dem eintreibenden Kegelritzel.

Die Kegelritzelachse liegt bei Figur 4 und 5 in der Ebene des größten Achsabstandes, bei den Figuren 6 und 7 senkrecht hierzu.

Die genannten Vorteile sind besonders wichtig bei sehr großen, sogenannten Industrie-Getrieben. Diese Getriebe haben eine maximal übertragbare Leistung von mehr als 100kW.

Wie aus den Figuren ersichtlich ist nur ein einziges erfindungsgemäßes Gehäuse zur Herstellung eines 2-, 3-, und 4-stufigen Stirnradgetriebes sowie eines 3- und 4-stufigen Kegelstirnradgetriebes notwendig, insgesamt also mindestens 7 Ausführungsformen.

Wesentlicher weiterer Vorteil ist auch, dass sich gleiche Anbauteile, beispielsweise Motoradapter, für alle Kegelstimradgetriebe einer Baugröße adaptieren lassen. Ebenso sind auch die Schnittstellen sowie die Anbauteile für die 2- und 3- stufigen Stirnradgetriebe, die sich durch Parallelverschiebung entlang des Gehäuses um a_1 auch am 4-stufigen Stirnradgetriebe einsetzen lassen

Wesentlich ist bei der Erfindung auch, dass bei gleichem Gehäuse und gleichem Ort der Abtriebswelle und/oder Abtriebslagers und/oder der Abtriebsbohrung der Ort der Achse der zweiten Welle des Getriebes an immer dieselbe Position vorsehbar ist. Dies gilt nicht nur für eine dreistufige sondern auch für mehrstufige Varianten, wie vierstufige oder fünfstufige.

Man muss also nur ein Gehäuse fertigen und kann dieses für eine dreistufige, vierstufige , fünfstufige Variante verwenden. Dabei ist der Eintrieb parallel oder mit Winkel, von Insbesondere 90°, zur Abtriebswelle ausführbar, ohne dass der Ort der zweiten Achse der zweiten Welle geändert werden müsste. Es gibt sozusagen zwei fixe Größen: der Ort der zweiten Achse und der Achse der Abtriebswelle.

Diese Erkenntnis ist für den Fachmann überraschend. Denn im Stand der Technik ist dies nicht gelungen.

Vorteilig ist bei der Erfindung, dass dadurch die Wiederverwendbarkeit von Komponenten gewaltig erhöht wurde.

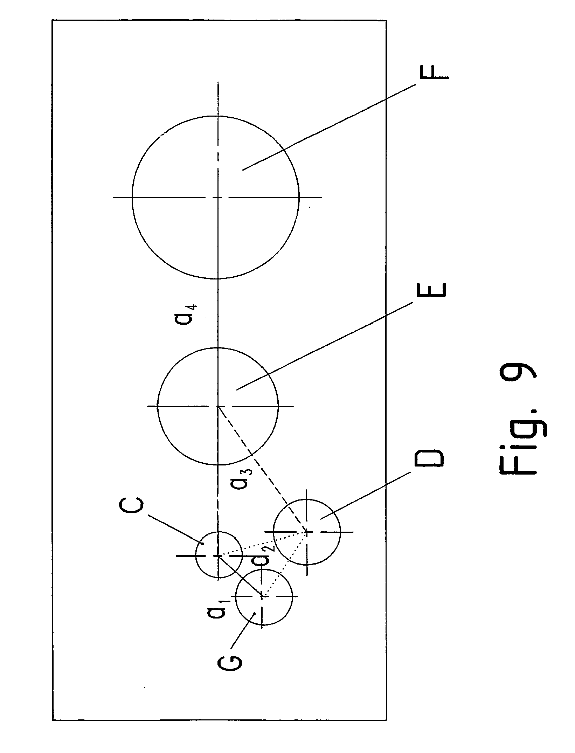

In den Figuren 9 bis 11 sind andere Ausführungsbeispiele gezeigt:

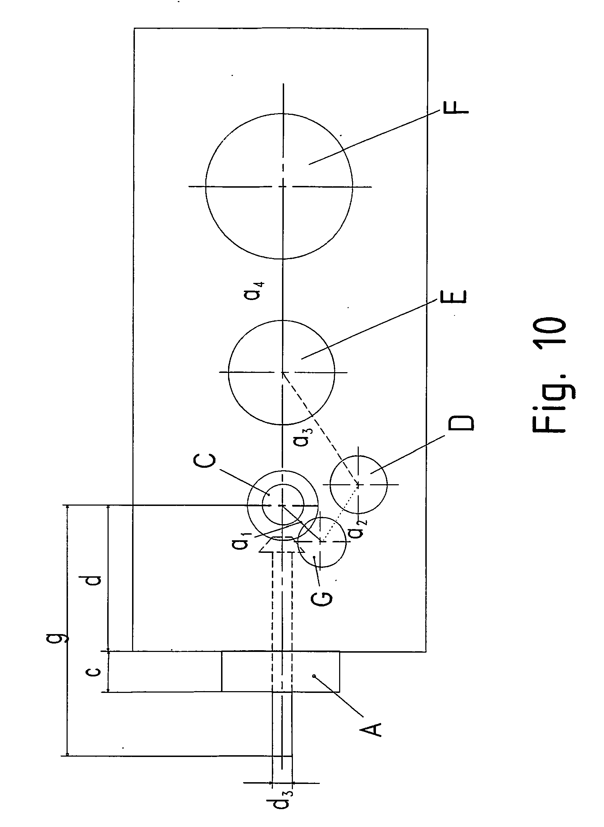

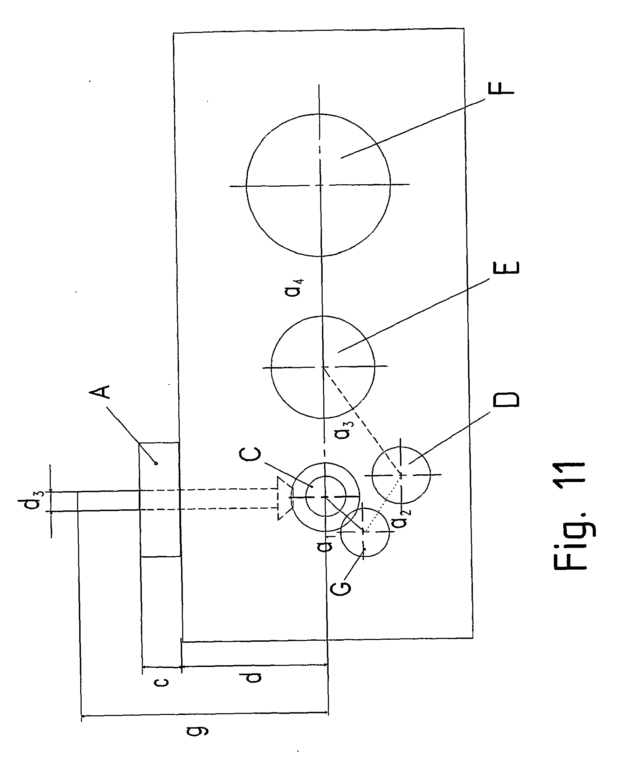

Dabei ist sogar eine fünfstufige Variante nach Figur 10 oder 11 erreichbar und bei Weglassung der eintreibenden Winkelstufe eine vierstufige Variante gemäß Figur 9.

Die Bohrungen C, E und F sitzen bei allen Varianten an derselben Stelle und in einer Linie. Wenn die Bohrungen D und G sowie die eintreibende Winkelstufe nicht verwendet werden, ist somit eine zweistufige Variante erreichbar.

Bei zusätzlicher Verwendung der Bohrung D und wahlweiser Verwendung der eintreibenden Winkelgetriebestufe, also auch der zugehörigen Bohrung mit Adapter A, sind wieder die Varianten erreichbar, die auch schon aus den Figuren 2 bis 8 bekannt gemacht sind.

Bei zusätzlicher Verwendung der Bohrung G ist aber noch eine höhere Stufigkeit und ein weiterer Bereich von Übersetzungszahlen erreichbar, wobei stets dasselbe Gehäuse verwendbar ist.

Da der Abstand von C nach D dem Abstand von B nach D gleicht, sind entsprechend zugehörige Verzahnungsteile wiederverwendbar, Dies verringert die Fertigungs- und Lagerkosten, auch wegen des verringerbaren Lagerraums.

Wichtig ist dabei zu beachten, dass die Relation a_1 < a_2 < a_3 < a_4.

Im Übrigen ist die Bemaßung der eintreibenden Teile, also die Werte c, d, d_3, und g gleich bei Figur 11 und 10. Somit sind auch dieselben Teile verwendbar.

## Patentansprüche

1. Gehäuse für ein mehrstufiges Getriebe einer Getriebebaureihe, welche zumindest zwei verschiedene Varianten von Getrieben umfasst,
umfassend zumindest
- zwei oder mehr Bohrungen zur wahlweisen Nutzung als erste Bohrung, die zur Aufnahme einer eintreibenden Welle vorgesehen ist,
- eine zweite Bohrung (C) zur Aufnahme einer Welle, die
bei Nicht-Nutzung der ersten Bohrung als eintreibende Welle und
bei Nutzung der ersten Bohrung als erste Zwischenwelle vorgesehen ist,
- weitere Bohrungen (D,E,G) zur Aufnahme weiterer Wellen,
- und eine letzte Bohrung (F) zur Aufnahme einer abtreibenden Welle,
wobei durch Nutzung oder Nicht-Nutzung mindestens einer der weiteren Bohrungen (D,G) verschiedenstufige Varianten der Getriebebaureihe herstellbar sind,
wobei die Achse der in der zweiten Bohrung (C) aufgenommene Welle und die Achse der in der letzten Bohrung (F) aufgenommenen Welle bei allen Varianten, insbesondere also auch den verschiedenstufigen Varianten, unveränderte Lage aufweisen
**dadurch gekennzeichnet daß**
das Gehäuse statt der Bohrungen Aussparungen zur Schaffung der jeweiligen Bohrung aufweist, und
die Aussparungen als Knockouts, also mit dünner Wandstärke, ausgeführt sind.

2. Gehäuse nach Anspruch 1,
**dadurch gekennzeichnet, dass**
zumindest zwei dieser zwei oder mehr Bohrungen zur wahlweisen Nutzung als erste Bohrung jeweils derart orientiert sind, dass die jeweils zugehörige eintreibende Wellenachse die Achse der zweiten Welle schneidet und diese beiden eintreibenden Wellenachsen zueinander rechtwinklig orientierbar sind

3. Gehäuse nach Anspruch 1 oder 2,
**dadurch gekennzeichnet, dass**
eine dritte der Bohrungen zur wahlweisen Nutzung als erste Bohrung, die zur Aufnahme einer eintreibenden Welle vorgesehen ist, derart vorgesehen ist und orientiert ist, dass die Achse der eintreibenden Welle parallel zur Achse der in der zweiten Bohrung (C) aufgenommenen Welle ausgerichtet ist.

4. Gehäuse nach mindestens einem der vorangegangenen Ansprüche,
**dadurch gekennzeichnet, dass**
die weiteren Bohrungen (D,E,G) zur Aufnahme der weiteren Wellen nicht in einer Linie angeordnet sind mit der abtreibenden Welle (F) und der in der zweiten Bohrung (C) aufgenommenen Welle.

5. Gehäuse nach mindestens einem der vorangegangenen Ansprüche,
**dadurch gekennzeichnet, dass**
bei den verschiedenstufigen Varianten die Anzahl der aufeinanderfolgenden Getriebestufen verschieden ist, wenn die erste dieser Stufen die zweite Bohrung (C) umfasst und die letzte die letzte Bohrung (F)

6. Gehäuse nach mindestens einem der vorangegangenen Ansprüche,
**dadurch gekennzeichnet, dass**
die eintreibende Welle zumindest mit einem von der ersten Getriebestufe umfassten Verzahnungsteil verbunden ist,
wobei die abtreibende Welle zumindest mit einem von der letzten Getriebestufe umfassten Verzahnungsteil verbunden ist,
wobei jede weitere Welle zumindest mit zwei, von jeweiligen Getriebestufen umfassten Verzahnungsteilen verbunden ist.

7. Gehäuse nach mindestens einem der vorangegangenen Ansprüche,
**dadurch gekennzeichnet, dass**
nicht genutzte Bohrungen mit einem Verschließmittel verschließbar sind.

8. Gehäuse nach mindestens einem der vorangegangenen Ansprüche,
**dadurch gekennzeichnet, dass**
die Bohrungen jeweils an einer Lagerstelle des Gehäuses vorgesehen sind, insbesondere also die Gehäusewand im Bereich um die Bohrung herum verdickt ausgeführt ist.

9. Gehäuse nach mindestens einem der vorangegangenen Ansprüche,
**dadurch gekennzeichnet, dass**
das Verzahnungsteil der eintreibenden Welle zumindest mit einem Verzahnungsteil der in der zweiten Bohrung (C) aufgenommenen Welle im Eingriff steht zur Bildung einer ersten Getriebestufe,
wobei ein weiteres, auf dieser Welle verbundenes Verzahnungsteil zumindest mit einem Verzahnungsteil einer weiteren Welle im Eingriff steht zur Bildung einer zweiten Getriebestufe,
und wobei ein Verzahnungsteil einer weiteren Welle zumindest mit einem Verzahnungsteil der abtreibenden Welle im Eingriff steht zur Bildung einer letzten Getriebestufe

10. Gehäuse nach mindestens einem der vorangegangenen Ansprüche,
**dadurch gekennzeichnet, dass**
mindestens drei Bohrungen (C,E,F) in einer geraden Linie angeordnet sind

11. Gehäuse nach Anspruch 10,
**dadurch gekennzeichnet, dass**
die wahlweise genutzte oder nicht-genutzte weitere Bohrung (G,D) zur Herstellung verschiedenstufger Varianten der Getriebebaureihe nicht in dieser Linie angeordnet sind.

12. Getriebe
**dadurch gekennzeichnet, dass**
es ein Gehäuse nach mindestens einem der vorangegangenen Ansprüche umfasst.

13. Getriebebaukasten, welcher verschiedene Varianten von mehrstufigen Getrieben umfasst,
wobei jede Variante zumindest ein Gehäuse mit Lagerstellen aufweist, in die Bohrungen zur Aufnahme von Wellen eingebracht und/oder einbringbar sind,
**dadurch gekennzeichnet, dass**
alle Varianten ein Gehäuse nach mindestens einem der Ansprüche 1 bis 11 enthalten.

14. Getriebebaukasten nach Anspruch 15,
**dadurch gekennzeichnet, dass**
die Herstellung, insbesondere die Herstellung von Bohrungen, durch Entfernen von Knockouts und/oder Bearbeitung von Aussparungen vorgesehen ist

15. Getriebebaukasten nach Anspruch 15,
**dadurch gekennzeichnet, dass**
an einer Lagerstelle ein Adapter verbindbar ist, der das zugehörige Lager umfasst.

## Claims

1. A housing for a multi-stage gear unit of a gear unit series, which comprises at least two different variants of gear units,
comprising at least
- two or more bores for optional use as a first bore which is provided for housing an input shaft,
- a second bore (C) for housing a shaft which is provided when the first bore is not used as an input shaft and when the first bore is used as a first intermediate shaft,
- further bores (D, E, G) for housing further shafts,
- and a last bore (F) for housing an output shaft,
wherein different-stage variants of the gear unit series may be produced by the use or non-use of at least one of the further bores (D, G),
wherein the axis of the shaft housed in the second bore (C) and the axis of the shaft housed in the last bore (F) have an unchanged position in all variants, particularly also the different-stage variants,
**characterised in that** the housing has, instead of the bores, recesses to create the respective bores, and
the recesses are made in the form of knockouts, that is with a thin wall thickness.

2. A housing according to Claim 1,
**characterised in that**
at least two of these two or more bores for optional use as a first bore are each oriented in such a way that the respectively associated input shaft axis intersects the axis of the second shaft and these two input shaft axes may be oriented at right angles to one another.

3. A housing according to Claim 1 or 2,
**characterised in that**
a third one of the bores for optional use as a first bore, which is provided for housing an input shaft, is provided and oriented in such a way that the axis of the input shaft is aligned parallel to the axis of the shaft housed in the second bore (C).

4. A housing according to at least one of the preceding claims,
**characterised in that**
the further bores (D, E, G) for housing the further shafts are not arranged in a line with the output shaft (F) and the shaft housed in the second bore (C).

5. A housing according to at least one of the preceding claims,
**characterised in that**
for the different-stage variants the number of the successive gear stages is different if the first of these stages comprises the second bore (C) and the last one comprises the last bore (F).

6. A housing according to at least one of the preceding claims,
**characterised in that**
the input shaft is connected at least to a toothing part comprised by the first gear stage,
the output shaft being connected at least to a toothing part comprised by the last gear stage,
each further shaft being connected at least to two toothing parts comprised by respective gear stages.

7. A housing according to at least one of the preceding claims,
**characterised in that**
unused bores may be closed with a closing means.

8. A housing according to at least one of the preceding claims,
**characterised in that**
the bores are each provided at a bearing point of the housing, in particular the housing wall is thus made thickened in the region around the bore.

9. A housing according to at least one of the preceding claims,
**characterised in that**
the toothing part of the input shaft meshes at least with a toothing part of the shaft housed in the second bore (C) to form a first gear stage, a further toothing part, connected to this shaft, meshing at least with a toothing part of a further shaft to form a second gear stage,
and a toothing part of a further shaft meshing at least with a toothing part of the output shaft to form a last gear stage.

10. A housing according to at least one of the preceding claims,
**characterised in that** at least three bores (C, E, F) are arranged in a straight line.

11. A housing according to Claim 10,
**characterised in that**
the optionally used or unused further bore (G, D) for producing different-stage variants of the gear unit series is not arranged in this line.

12. A gear unit,
**characterised in that** it comprises a housing according to at least one of the preceding claims.

13. A modular gear unit system which comprises different variants of multi-stage gear units,
each variant having at least one housing with bearing points into which bores for housing shafts are introduced and/or may be introduced,
**characterised in that**
all the variants include a housing according to at least one of Claims 1 to 11.

14. A modular gear unit system according to Claim 13 [*sic*],
**characterised in that**
the creation, in particular the creation of bores, is provided by removing knockouts and/or machining recesses.

15. A modular gear unit system according to Claim 13 [*sic*],
**characterised in that**
an adapter may be attached at a bearing point, which adapter comprises the associated bearing.

## Revendications

1. Carter pour une transmission à plusieurs étages d'une gamme de transmissions qui comprend au moins deux variantes différentes de transmissions, comprenant au moins
- deux perçages ou davantage à utiliser au choix comme premier perçage prévu pour recevoir un arbre menant,
- un deuxième perçage (C) pour recevoir un arbre qui est prévu comme arbre menant en cas d'absence d'utilisation du premier perçage et est prévu comme premier arbre intermédiaire en cas d'utilisation du premier perçage,
- des perçages supplémentaires (D, E, G) destinés à recevoir des arbres supplémentaires,
- et un dernier perçage (F) destiné à recevoir un arbre mené,
sachant que l'utilisation ou l'absence d'utilisation d'au moins un des perçages supplémentaires (D, G) permet de réaliser des variantes à différents nombres d'étages de la gamme de transmissions,
sachant que l'axe de l'arbre reçu dans le deuxième perçage (C) et l'axe de l'arbre reçu dans le dernier perçage (F) se trouvent au même emplacement dans toutes les variantes, donc en particulier également dans les variantes à différents nombres d'étages,
**caractérisé en ce que** le carter présente au lieu des perçages des creux pour créer le perçage respectif et les creux sont réalisés sous la forme de repoussages, donc avec une paroi mince.

2. Carter selon la revendication 1, **caractérisé en ce qu'**au moins deux de ces deux perçages ou davantage à utiliser au choix comme premier perçage sont respectivement orientés de telle sorte que l'axe d'arbre menant respectivement associé coupe l'axe du deuxième arbre et que ces deux axes d'arbres menants peuvent être orientés à angle droit l'un par rapport à l'autre.

3. Carter selon la revendication 1 ou 2, **caractérisé en ce qu'**un troisième des perçages à utiliser au choix comme premier perçage prévu pour recevoir un arbre menant est prévu et orienté de telle sorte que l'axe de l'arbre menant est orienté parallèlement à l'axe de l'arbre reçu dans le deuxième perçage (C).

4. Carter selon au moins une des revendications précédentes, **caractérisé en ce que** les perçages supplémentaires (D, E, G) destinés à recevoir des arbres supplémentaires ne sont pas disposés en ligne avec l'arbre mené (F) et avec l'arbre reçu dans le deuxième perçage (C).

5. Carter selon au moins une des revendications précédentes, **caractérisé en ce que,** dans les variantes à différents nombres d'étages, le nombre d'étages de transmission successifs est différent si le premier de ces étages comprend le deuxième perçage (C) et le dernier le dernier perçage (F).

6. Carter selon au moins une des revendications précédentes, **caractérisé en ce que** l'arbre menant est relié à au moins une partie dentée entourée par le premier étage de transmission,
sachant que l'arbre mené est relié à au moins une partie dentée entourée par le dernier étage de transmission,
sachant que chaque arbre supplémentaire est relié à au moins deux parties dentées entourées par des étages de transmission respectifs.

7. Carter selon au moins une des revendications précédentes, **caractérisé en ce que** les perçages non utilisés peuvent être obturés par un moyen d'obturation.

8. Carter selon au moins une des revendications précédentes, **caractérisé en ce que** les perçages sont respectivement prévus en un point d'appui du carter, donc la paroi du carter est notamment réalisée épaissie dans la région située tout autour du perçage.

9. Carter selon au moins une des revendications précédentes, **caractérisé en ce que** la partie dentée de l'arbre menant engrène au moins avec une partie dentée de l'arbre reçu dans le deuxième perçage (C) pour former un premier étage de transmission, sachant qu'une autre partie dentée montée sur cet arbre engrène au moins avec une partie dentée d'un arbre supplémentaire pour former un deuxième étage de transmission, et sachant qu'une partie dentée d'un arbre supplémentaire engrène au moins avec une partie dentée de l'arbre mené pour former un dernier étage de transmission.

10. Carter selon au moins une des revendications précédentes, **caractérisé en ce qu'**au moins trois perçages (C, E, F) sont disposés en ligne droite.

11. Carter selon la revendication 10, **caractérisé en ce que** les perçages supplémentaires au choix utilisés ou non utilisés pour réaliser des variantes à différents nombres d'étages de la gamme de transmissions ne sont pas disposés sur cette ligne.

12. Transmission, **caractérisée en ce qu'**elle comprend un carter selon au moins une des revendications précédentes.

13. Système modulaire de transmissions qui comprend différentes variantes de transmissions à plusieurs étages, sachant que chaque variante présente au moins un carter avec des points d'appui dans lesquels sont ménagés et/ou peuvent être ménagés des perçages destinés à recevoir des arbres, **caractérisé en ce que** toutes les variantes comprennent un carter selon au moins une des revendications 1 à 11.

14. Système modulaire de transmissions selon la revendication 13, **caractérisé en ce que** la fabrication, notamment la fabrication des perçages, est prévue en éliminant des repoussages et/ou en usinant des creux.

15. Système modulaire de transmissions selon la revendication 13, **caractérisé en ce qu'**un adaptateur qui comprend le palier associé peut être monté en un point d'appui.
